# EUROPÄISCHE PATENTANMELDUNG

(11) **EP 4 459 830 A1**
(43) Veröffentlichungstag der Anmeldung: **06.11.2024**
(21) Anmeldenummer: 24169195.5
(22) Anmeldetag: 09.04.2024
(51) Int. Cl.: H02J 7/00

(54) **ELEKTRISCHER AKKU UND AKKU-LADESYSTEM MIT KÜHLUNGSMODUS**

(30) Priorität: 03.05.2023 DE 102023111390
(71) Anmelder: Wacker Neuson Produktion GmbH & Co. KG, 85084 Reichertshofen (DE)
(72) Erfinder: WEISKOPF, Alto, 85250 Altomünster (DE); NIGGL, Gustav, 85053 Ingolstadt (DE); HACKL, Christopher, 86558 Freinhausen (DE); DILLER, Patrick, 86558 Hohenwart (DE)
(74) Vertreter: Müller Hoffmann & Partner

(57) **Zusammenfassung**

Es wird ein Akku-Ladesystem zum Aufladen eines elektrischen Akkus (1) angegeben, mit einer Ladeeinrichtung (2) zum Bereitstellen eines elektrischen Stroms (3) zum Aufladen des Akkus (1); mit einer Temperaturmesseinrichtung (7) zum Messen der Temperatur an wenigstens einer Stelle an oder in dem Akku (1) und damit Bestimmen eines Temperatur-Istwerts (8); und mit einer Steuerungseinrichtung (9) zum Steuern eines Ladevorgangs in Abhängigkeit von der gemessenen Temperatur. Die Steuerungseinrichtung (9) ist ausgebildet, wenigstens die folgenden Betriebsarten zu aktivieren: einen Lademodus, in dem der Akku (1) mit elektrischem Strom (3) aufgeladen wird; einen Kühlungsmodus, während dem eine Abkühlung des Akkus (1) vorgesehen ist; oder einen Abschaltmodus, in dem der Akku (1) nicht mit elektrischem Strom aufgeladen wird und der Akku (1) abgeschaltet wird. Weiterhin ist die Steuerungseinrichtung (9) ausgebildet, den Temperatur-Istwert (8) mit einem vorgegebenen Temperatur-Schwellwert zu vergleichen; den Lademodus zu aktivieren, wenn der Temperatur-Istwert (8) unterhalb des Temperatur-Schwellwerts liegt; den Kühlungsmodus zu aktivieren, wenn der Temperatur-Istwert (8) oberhalb des Temperatur-Schwellwerts liegt; während eines vorgegebenen Kühlungszeitraums im Kühlungsmodus in Abhängigkeit von dem Temperatur-Istwert (8) den Kühlungsmodus aufrecht zu erhalten oder den Kühlungsmodus zu beenden und in den Lademodus zu wechseln; nach Ablauf des Kühlungszeitraums den Abschaltmodus zu aktivieren.

## Beschreibung

Die Erfindung betrifft einen elektrischen Akku und ein Akku-Ladesystem mit Kühlungsmodus.

Elektrische Akkus, insbesondere wiederaufladbare Batterien, können sich im Betrieb aufgrund von internen Verlusten beim Entladen erwärmen. Die Erwärmung kann derart stark sein, dass die Akkus nicht unmittelbar darauffolgend wieder aufgeladen werden können, ohne Schäden an den Batteriezellen zu verursachen. Vielmehr ist es erforderlich, dass die Batteriezellen im Inneren des Akkus während des Aufladevorgangs eine gewisse Temperatur nicht überschreiten. Dementsprechend ist es bekannt, bei einer zu hohen Akkutemperatur den Aufladevorgang zu unterbinden. Zudem kann dem Benutzer mit einem optischen Signal, z.B. mit einer Übertemperatur-LED, signalisiert werden, dass der Akku zu warm ist.

Nach einer gewissen kurzen Zeitspanne nach Erkennen einer zu hohen Zelltemperatur, z.B. nach 30 Sekunden, schaltet sich der Akku ab. Der Benutzer kann dann abwarten, bis der Akku, insbesondere die Zellen des Akkus, weit genug abgekühlt sind, bevor er den Ladevorgang erneut beginnt. Dazu muss der Akku vom Benutzer manuell wieder aktiviert werden.

Bei einer festgestellten Übertemperatur der Zellen verhindert somit insbesondere das Batteriemanagementsystem (BMS) des Akkus ein Starten bzw. Fortführen des Ladevorgangs. Das BMS kann mit Hilfe der Übertemperatur-LED diesen Zustand signalisieren und nachfolgend den Akku abschalten.

Daraus ergeben sich für den Benutzer verschiedene Nachteile. So muss er z.B. den Akku erneut manuell aktivieren, um den Ladevorgang erneut zu starten. Dies führt zu einem erhöhten Zeitbedarf für das Laden, da der Benutzer nicht den exakten Zeitpunkt kennt, ab dem aufgrund der gesunkenen Temperatur ein Laden wieder möglich wäre. Zudem besteht die Fallkonstellation, dass der Benutzer den Ladevorgang eines (zu warmen) Akkus startet und sich danach vom Ort entfernt in der Annahme, der Akku würde aufgeladen. Auf diese Weise entgeht ihm die z.B. vom BMS festgestellte Information, dass der Akku zu warm ist und sich nachfolgend abschaltet, da die zugehörige Information in der Regel erst einige Sekunden nach Beginn des Ladevorgangs erscheint (Aktivieren der Übertemperatur-LED). Der Benutzer vertraut dann bei seiner Rückkehr zum Akku darauf, dass der Akku wieder aufgeladen wird, obwohl dies tatsächlich nicht der Fall ist. Dies kann zu erheblichen Zeitverlusten führen.

Der Erfindung liegt die Aufgabe zugrunde, den Ladevorgang eines Akkus bei zu hohen Zelltemperaturen zu verbessern und den Benutzer zu entlasten.

Die Aufgabe wird erfindungsgemäß gelöst durch ein Akku-Ladesystem nach Anspruch 1 sowie durch einen elektrischen Akku gemäß dem nebengeordneten Anspruch. Zudem wird ein Verfahren zum Aufladen eines elektrischen Akkus angegeben. Vorteilhafte Ausgestaltungen sind in den abhängigen Ansprüchen aufgeführt.

Es wird ein Akku-Ladesystem zum Aufladen eines elektrischen Akkus angegeben, mit einer Ladeeinrichtung zum Bereitstellen eines elektrischen Stroms zum Aufladen des Akkus; einer Temperaturmesseinrichtung zum Messen der Temperatur an wenigstens einer Stelle an oder in dem Akku und damit Bestimmen eines Temperatur-Istwerts; und mit einer Steuerungseinrichtung zum Steuern eines Ladevorgangs in Abhängigkeit von der gemessenen Temperatur. Die Steuerungseinrichtung ist ausgebildet, wenigstens die folgenden Betriebsarten zu aktivieren: einen Lademodus, in dem der Akku mit elektrischem Strom aufgeladen wird, einen Kühlungsmodus, während dem eine Abkühlung des Akkus vorgesehen ist, und einen Abschaltmodus, in dem der Akku nicht mit elektrischem Strom aufgeladen wird und der Akku abgeschaltet wird. Dabei ist die Steuerungseinrichtung ausgebildet, den Temperatur-Istwert mit einem vorgegebenen Temperatur-Schwellwert zu vergleichen; den Lademodus zu aktivieren, wenn der Temperatur-Istwert unterhalb des Temperatur-Schwellwerts liegt; den Kühlungsmodus zu aktivieren, wenn der Temperatur-Istwert oberhalb des Temperatur-Schwellwerts liegt; während eines vorgegebenen Kühlungszeitraums im Kühlungsmodus in Abhängigkeit von dem Temperatur-Istwert den Kühlungsmodus aufrechtzuerhalten oder den Kühlungsmodus zu beenden und in den Lademodus zu wechseln; und nach Ablauf des Kühlungszeitraums den Abschaltmodus zu aktivieren.

Die Steuerungseinrichtung kann dem Akku zugeordnet und z.B. im Batteriemanagementsystem (BMS) integriert sein. Alternativ ist es auch möglich, die Steuerungseinrichtung in der Ladeeinrichtung oder als separate Einheit vorzusehen.

Die Steuerungseinrichtung überwacht die Temperatur des Akkus (Temperatur-Istwert), z.B. die Temperatur in oder an einzelnen Batteriezellen des Akkus, und vergleicht sie mit einem Grenzwert (Temperatur-Schwellwert).

Wenn festgestellt wird, dass die Akkutemperatur höher ist als der Grenzwert, ist der Akku zu warm, so dass er nicht aufgeladen werden kann, ohne Schaden zu nehmen. Die Steuerungseinrichtung unterbindet in diesem Fall das Aufladen des Akkus. Sie schaltet aber den Akku nicht - wie beim Stand der Technik - ab, sondern aktiviert den Kühlungsmodus. "Aktivieren" bedeutet hierbei das Umschalten von einem Modus in den anderen.

Im Kühlungsmodus bleibt der Akku während eines bestimmten Zeitraums (vorgegebener Kühlungszeitraum) eingeschaltet, während er abkühlt. Anders als beim Stand der Technik wird der Akku also nicht abgeschaltet. Der Kühlungszeitraum kann in geeigneter Weise vorgegeben werden und z.B. 60 Minuten betragen. Diese Zeit dürfte meistens ausreichen, dass die Akkutemperatur unter den Temperatur-Schwellwert sinkt. Dieser Zustand wird von der Steuerungseinrichtung erfasst, so dass dann der Lademodus aktiviert und der Akku aufgeladen wird.

Wenn jedoch innerhalb des vorgegebenen Kühlungszeitraums die Temperatur nicht ausreichend sinkt, folglich der Temperatur-Istwert oberhalb des Temperatur-Schwellwerts bleibt, wird der Akku schließlich abgeschaltet (Abschaltmodus). Ein Laden des Akkus findet dann nicht statt.

Wenn während eines Ladevorgangs die Ist-Temperatur des Akkus wieder über den Temperatur-Schwellwert steigt, kann der Lademodus erneut abgebrochen und in den Kühlungsmodus umgeschaltet werden. Dann beginnt die Kühlungszeit während des Kühlungszeitraums erneut zu laufen. Auf diese Weise kann während eines Ladevorgangs mehrfach zwischen dem Lademodus und dem Kühlungsmodus hin und her geschaltet werden.

Wenigstens ein Teil der Steuerungseinrichtung kann in einem als Ladeeinrichtung dienenden Ladegerät oder in einer von dem Ladegerät und dem Akku getrennten Einheit angeordnet sein. Insbesondere kann es sich bei letzterer um eine räumlich bzw. strukturell von dem Ladegerät und dem Akku getrennte Einheit handeln.

Ebenso ist es aber auch möglich, dass die Steuerungseinrichtung vollständig in den Akku integriert ist. In diesem Fall kann die Ladeeinrichtung bzw. das Ladegerät unverändert bleiben, ohne dass an ihr konstruktive Veränderungen vorgenommen werden müssen. Der Akku allein, insbesondere sein Batteriemanagementsystem, ist dann in der Lage, die verschiedenen Betriebsarten zu schalten bzw. zu aktivieren.

Dementsprechend wird ein elektrischer Akku angegeben, mit
- einer Temperaturmesseinrichtung zum Messen der Temperatur an wenigstens einer Stelle an oder in dem Akku und damit Bestimmen eines Temperatur-Istwerts; und mit
- einer Steuerungseinrichtung zum Steuern eines Ladevorgangs zum Aufladen des Ackus in Abhängigkeit von der gemessenen Temperatur;
wobei die Steuerungseinrichtung ausgebildet ist, wenigstens die folgenden Betriebsarten zu aktivieren:

| | |
|---|---|
| + | einen Lademodus, in dem der Akku mit elektrischem Strom aufgeladen wird; |
| + | einen Kühlungsmodus, während dem eine Abkühlung des Akkus vorgesehen ist; |
| + | einen Abschaltmodus, in dem der Akku nicht mit elektrischem Strom aufgeladen wird |

und der Akku abgeschaltet wird;
und wobei die Steuerungseinrichtung ausgebildet ist,
- den Temperatur-Istwert mit einem vorgegebenen Temperatur-Schwellwert zu vergleichen;
- den Lademodus zu aktivieren, wenn der Temperatur-Istwert unterhalb des Temperatur-Schwellwerts liegt;
- den Kühlungsmodus zu aktivieren, wenn der Temperatur-Istwert oberhalb des Temperatur-Schwellwerts liegt;
- während eines vorgegebenen Kühlungszeitraums im Kühlungsmodus in Abhängigkeit von dem Temperatur-Istwert den Kühlungsmodus aufrecht zu erhalten oder den Kühlungsmodus zu beenden und in den Lademodus zu wechseln;
- nach Ablauf des Kühlungszeitraums den Abschaltmodus zu aktivieren.

Der elektrische Akku ist somit in der Lage, sämtliche Funktionen mit Hilfe seiner Steuerungseinrichtung zu verwirklichen. Ein derartiger elektrischer Akku weist die Batteriezellen zum Speichern der elektrischen Ladung sowie ein Batteriemanagementsystem auf.

Bei dem vorbeschriebenen Akku-Ladesystem wie auch bei dem vorstehend beschriebenen elektrischen Akku kann die Steuerungseinrichtung ausgebildet sein, um während des Lademodus von dem Lademodus in den Kühlungsmodus zu wechseln, wenn der Temperatur-Istwert oberhalb des Temperatur-Schwellwerts liegt. Das bedeutet, dass auch im Lademodus die Temperatur im Akku permanent oder regelmäßig überwacht wird, so dass gegebenenfalls der Kühlungsmodus aktiviert werden kann. Wie oben bereits beschrieben, kann während eines Ladevorgags mehrfach zwischen Lademodus und Kühlungsmodus umgeschaltet werden.

Für das Festlegen des Umschaltens am Temperatur-Schwellwert kann eine Hysterese definiert werden, um ein zu schnelles Umschalten bzw. ein häufiges Wechseln zwischen Lademodus und Kühlungsmodus zu verhindern.

Die Steuerungseinrichtung kann ausgebildet sein, um während des vorgegebenen Kühlungszeitraums im Kühlungsmodus den Temperatur-Istwert mit dem Temperatur-Schwellwert zu vergleichen und den Kühlungsmodus aufrechtzuerhalten, wenn der Temperatur-Istwert oberhalb des Temperatur-Schwellwerts liegt, oder den Kühlungsmodus zu beenden und in den Lademodus zu wechseln, wenn der Temperatur-Istwert unterhalb des Temperatur-Schwellwerts liegt.

Die Steuerungseinrichtung kann ausgebildet sein, eine Kühlungszeitdauer zu erfassen, während der der Kühlungsmodus aktiv ist, und die Kühlungszeitdauer mit einem vorgegebenen Kühlungszeitraum zu vergleichen. Die während des Kühlungsmodus ablaufende Zeit (Kühlungszeitdauer) wird somit erfasst, während der Kühlungsmodus aktiv ist. Das Erreichen des vorgegebenen Kühlungszeitraums (maximale Kühlungsdauer) wird von der Steuerungseinrichtung erfasst, so dass sie entsprechende Maßnahmen ergreifen kann. Insbesondere kann die Steuerungseinrichtung nach fruchtlosem Ablauf des Kühlungszeitraums, also ohne Wiederaufnahme des Lademodus, den Abschaltmodus aktivieren.

In dem Kühlungsmodus ist die Abkühlung des Akkus vorgesehen, wobei die Abkühlung des Akkus gemäß wenigstens einem der folgenden Wirkprinzipien verwirklicht ist: Natürliche Konvektion, Zwangskonvektion (z.B. Lüfter), Wärmeleitung, Wärmestrahlung. Im Fall der natürlichen Konvektion wird die Wärme des Akkus durch die natürlich vorbeistreichende Luft abgeführt. Dieser Vorgang kann im Wege der Zwangskonvektion z.B. mit einem Lüfter verstärkt werden, der auch in dem Akku integriert sein kann. Ergänzend kann die Wärme durch Wärmeleitung oder Wärmestrahlung abgeführt werden. In der Regel werden sich mehrere dieser Wirkprinzipien kombinieren.

Es kann eine Lüftungseinrichtung vorgesehen sein, zum Kühlen des Akkus wenigstens während des Kühlungsmodus. Mit Hilfe der Lüftungseinrichtung wird somit eine Zwangslüftung und damit eine Zwangskonvektion erreicht. Die Lüftungseinrichtung kann von der Steuerungseinrichtung angesteuert werden. Sie kann von dem Ladegerät, dem Akku oder einem zusätzlichen Netzteil mit Energie versorgt werden.

Wenn die Lüftungseinrichtung vom Ladegerät mit Energie versorgt werden soll, muss das Ladegerät in geeigneter Weise ausgebildet sein, um den Kühlungsmodus erkennen zu können. Bei einer Integration der Lüftungseinrichtung in den Akku ist es möglich, das Batteriemanagementsystem mit entsprechender Funktionalität auszustatten.

Die Lüftungseinrichtung kann eine Lüftersteuerung aufweisen, wobei die Lüftersteuerung die Leistung der Lüftungseinrichtung in Abhängigkeit von dem Temperatur-Istwert variabel ansteuert. Die Lüftersteuerung kann - wie oben bereits gesagt - Bestandteil der Steuerungseinrichtung sein. Sie regelt die Lüfterleistung und damit die Kühlleistung in Abhängigkeit von der Akku- bzw. Zellentemperatur. Je höher die Temperatur ist bzw. je größer der Abstand der Temperatur zu dem Temperatur-Schwellwert ist, desto größer wird die Lüfterleistung sein, um eine wirksame Kühlung zu bewirken.

Die Steuerungseinrichtung kann ein Schaltelement aufweisen, zum Schalten einer Ladestromzufuhr zu dem Akku. Als Schaltelement eignen sich Komponenten wie z.B. MOSFET, Relais, Chips, Transistor o.Ä.

Es wird ein Verfahren zum Aufladen eines elektrischen Akkus angegeben, mit den Schritten:
- Bereitstellen eines elektrischen Stroms zum Aufladen des Akkus;
- Messen der Temperatur an wenigstens einer Stelle an oder in dem Akku und damit Bestimmen eines Temperatur-Istwerts;
- Steuern eines Ladevorgangs in Abhängigkeit von der gemessenen Temperatur;
- Aktivieren von wenigstens den folgenden Betriebsarten:

| | |
|---|---|
| + | einen Lademodus, in dem der Akku mit elektrischem Strom aufgeladen wird; |
| + | einen Kühlungsmodus, während dem eine Abkühlung des Akkus vorgesehen ist; |
| + | einen Abschaltmodus, in dem der Akku nicht mit elektrischem Strom aufgeladen wird |

und der Akku abgeschaltet wird;
und wobei das Aktivieren der Betriebsarten gemäß folgenden Regeln erfolgt:
- Vergleichen des Temperatur-Istwerts mit einem vorgegebenen Temperatur-Schwellwert;
- Aktivieren des Lademodus, wenn der Temperatur-Istwert unterhalb des Temperatur-Schwellwerts liegt;
- Aktivieren des Kühlungsmodus, wenn der Temperatur-Istwert oberhalb des Temperatur-Schwellwerts liegt;
- während eines vorgegebenen Kühlungszeitraums im Kühlungsmodus in Abhängigkeit von dem Temperatur-Istwert Aufrechterhalten des Kühlungsmodus oder Beenden des Kühlungsmodus und Wechseln in den Lademodus;
- nach Ablauf des Kühlungszeitraums Aktivieren des Abschaltmodus.

Durch den Kühlungsmodus des Akkus kann das Laden im Vergleich zu bisherigen Verfahren komfortabler für den Nutzer gestaltet werden. Bei einer zu hohen Zelltemperatur ist es nicht mehr notwendig, den Akku manuell erneut zu aktivieren. Die Aktivierung des Lademodus erfolgt vielmehr automatisch mit Hilfe der Steuerungseinrichtung. Damit kann die Gesamtladezeit (Wartezeit, bis der Akku weit genug abgekühlt ist, sowie die eigentliche Ladezeit) reduziert werden, da der Akku mithilfe seiner Steuerungseinrichtung selbständig zum frühestmöglichen Zeitpunkt den Ladevorgang beginnt.

Wenn die Steuerungseinrichtung im Akku selbst vorgesehen ist, kann der Kühlungsmodus mit üblichen, bereits bekannten Ladegeräten bereits umgesetzt werden, auch mit "einfachen" Ladegeräten, die keine weitergehende "Ladeintelligenz" aufweisen. Eine Kommunikation zwischen Ladegerät und Akku ist nicht erforderlich, da der Akku den Ladevorgang eigenständig überwacht und die Aktivierung des Lademodus, des Kühlungsmodus oder des Abschaltmodus steuert.

Diese und weitere Vorteile und Merkmale werden nachfolgend anhand von Beispielen unter Zuhilfenahme der begleitenden Figuren näher erläutert. Es zeigen:
- Fig. 1: in schematischer Darstellung den Aufbau eines Akkuladesystems gemäß der Erfindung; und
- Fig. 2: in schematischer Darstellung ein Beispiel für ein erfindungsgemäßes Ladeverfahren.

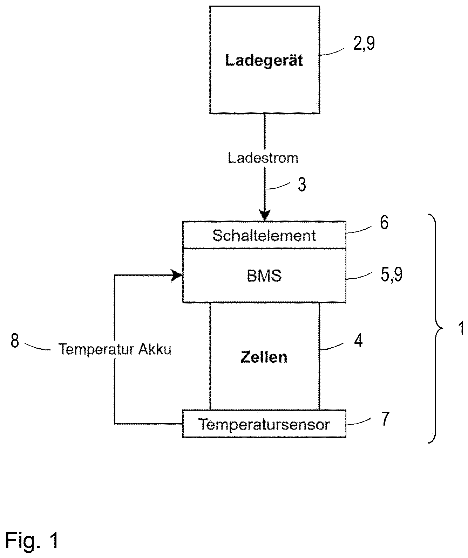

Fig. 1 zeigt in schematischer Blockdarstellung den Aufbau eines erfindungsgemäßen AkkuLadesystems mit einem elektrischen Akku 1 (z.B. einer wiederaufladbaren Batterie) und einem als Ladeeinrichtung dienenden Ladegerät 2. Das Ladegerät 2 stellt einen elektrischen Strom als Ladestrom 3 zur Verfügung.

Als Bestandteil des Akkus 1 sind Zellen 4, z.B. elektrochemische Batteriezellen, vorgesehen, die mit einem Batteriemanagementsystem BMS 5 gekoppelt sind. Das BMS 5 ist unter anderem dazu ausgebildet, die Zufuhr des Ladestroms 3 über ein Schaltelement 6, z.B. ein MOSFET, ein Relais, ein Chip, ein Transistor o.dgl. zu steuern. Weiterhin steuert das BMS 5 das Aufladen und Entladen der Zellen 4.

Als Bestandteil des Akkus 1 ist auch ein Temperatursensor 7 vorgesehen, der als Messwert einen Temperatur-Istwert 8 (Temperatur-Akku) generiert, der dem BMS 5 zugeführt wird. Der Temperatursensor 7 kann im Inneren bzw. dicht an den Zellen 4 angeordnet sein, um die Temperatur der Zellen 4 möglichst präzise zu bestimmen. Alternativ ist es auch möglich, den Temperatursensor 7 an anderer Stelle des Akkus 1 oder auch an der Außenseite eines Gehäuses des Akkus 1 vorzusehen. Weiterhin ist es möglich, mehrere Temperatursensoren 7 an mehreren Stellen in oder an dem Akku 1 zu verteilen, um auch eine Temperaturverteilung im Akku 1 bzw. lokale Temperaturspitzen ermitteln zu können. Zum Beispiel können zwei Temperatursensoren 7 in zwei verschiedenen Zellen 4 vorgesehen sein.

Als Bestandteil des BMS 5 kann auch eine Steuerungseinrichtung 9 vorgesehen sein, die den Ladevorgang des Akkus 1 überwacht. Die Steuerungsvorrichtung 1 kann alternativ bei einer Variante auch im Ladegerät 2 vorgesehen sein. Ebenso ist es möglich, Komponenten der Steuerungsvorrichtung 9 auf das Ladegerät 2 und den Akku 1, dort insbesondere auf das BMS 5 zu verteilen. Nicht dargestellt ist eine weitere Variante, bei der die Steuerungseinrichtung 9 in einer eigenen, unabhängigen Einheit vorgesehen ist.

Wenn z.B. das BMS 5 einen Ladevorgang erkennt, z.B. durch das Vorhandensein eines Ladestroms 3, der von dem BMS 5 detektiert wird, und gleichzeitig eine zu hohe Zelltemperatur (Temperatur-Istwert 8) vorliegt, kann das BMS 5 den Fluss des Ladestroms 3 vom Ladegerät 2 zum Akku 1 durch das Öffnen des Schaltelements 6 unterbinden. Dem Nutzer wird dies z.B. durch ein dauerhaftes Leuchten einer nicht dargestellten Übertemperatur-LED signalisiert.

Erfindungsgemäß bleibt der Akku 1 aber weiterhin für eine vorgegebene Zeit (Kühlungszeitraum) aktiv. Dieser Zustand wird auch als Kühlungsmodus bezeichnet, weil der Akku während dieser Zeit abgekühlt werden soll. Die Zeitdauer des Kühlungszeitraums kann z.B. 60 Minuten betragen.

Wenn in dem Kühlungszeitraum die gemessene Ist-Temperatur 8 der Zellen 4 wieder unter eine gewisse Schwelle (Temperatur-Schwellwert) gefallen ist, schließt das BMS 5 das Schaltelement 6 wieder, so dass der Lademodus aktiviert wird. Das Ladegerät 2 misst daraufhin eine Spannung an seinem Ausgang und beginnt wieder mit dem Ladevorgang, so dass der Akku 1 geladen wird.

Wenn hingegen der vorgegebene Kühlungszeitraum verstreicht, ohne dass das Laden des Akkus 1 (Lademodus) wieder aufgenommen werden kann, schaltet das BMS 5 bzw. die Steuerungseinrichtung 9 den Akku 1 ab (Abschaltmodus).

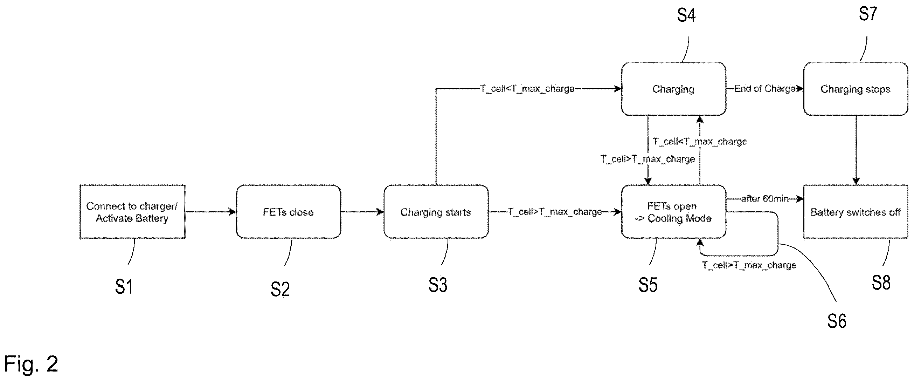

Fig. 2 zeigt den Ablauf beim Aufladen des Akkus in detaillierterer Form.

In Schritt S1 wird der Akku 1 mit dem Ladegerät 2 verbunden und der Akku 1 aktiviert bzw. eingeschaltet.

In Schritt S2 wird das Schaltelement 6 geschlossen, so dass in Schritt S3 das Aufladen des Akkus beginnt (Lademodus). Die Steuerungseinrichtung (z.B. BMS 5) überwacht dabei die Zelltemperatur T_cell (Temperatur-Istwert 8) und vergleicht ihn mit dem vorgegebenen Temperatur-Schwellwert (T_max_charge).

Wenn die Zelltemperatur (Temperatur-Istwert 8) kleiner ist als der Temperatur-Schwellwert, kann im Schritt S4 das Laden des Akkus 1 fortgeführt werden.

Wenn hingegen in Schritt S3 festgestellt wird, dass die Zelltemperatur größer als der Temperatur-Schwellwert ist, wird im Schritt S5 das Schaltelement 6 geöffnet und der Lademodus unterbrochen. Stattdessen wird der Kühlungsmodus aktiviert.

Während des Kühlungsmodus, der maximal in der Zeit während des vorgegebenen Kühlungszeitraums aktiviert sein kann, wird regelmäßig die Zelltemperatur mit dem Temperatur-Schwellwert in einem Schritt S6 verglichen.

Wenn in Schritt S6 festgestellt wird, dass die Zelltemperatur kleiner als der Temperatur-Schwellwert ist, wird das Aufladen im Schritt S4 gestartet bzw. wieder aufgenommen (Lademodus). Dazu wird das Schaltelement 6 geschlossen.

Auch während des Aufladens in Schritt S4 wird die Zelltemperatur überwacht. Wenn ein Überschreiten des Temperatur-Schwellwerts festgestellt wird, wird in Schritt S5 der Lademodus abgebrochen und - ggfs. erneut - in den Kühlungsmodus gewechselt.

Wenn in Schritt S4 festgestellt wird, dass der Akku 1 aufgeladen ist, kann der Ladevorgang im Schritt S7 beendet und der Akku 1 in Schritt S8 der abgeschaltet werden.

Wenn in Schritt S5 festgestellt wird, dass der vorgegebene Kühlungszeitraum abgelaufen ist (im gezeigten Beispiel 60 Minuten), wird der Akku im Schritt S8 abgeschaltet.

Im Kühlungsmodus kann die Kühlung des Akkus 1 bzw. der Zellen 4 durch natürliche Konvektion bewirkt werden. Die Kühlwirkung kann durch zusätzlichen Einsatz eines oder mehrerer Lüfter noch verstärkt werden, die den Akku 1 zusätzlich kühlen. Dadurch kann die Zeit, bis der Akku 1 weit genug herabgekühlt ist, deutlich reduziert werden, so dass der Ladevorgang (Lademodus) deutlich schneller gestartet werden kann.

Der in der Figur nicht gezeigte Lüfter kann entweder vom Ladegerät 2, vom Akku 1 oder von einem zusätzlichen Netzteil mit elektrischer Energie versorgt werden. Falls der Lüfter vom Ladegerät 2 aus versorgt wird, muss das Ladegerät 2 den Kühlungsmodus erkennen können, um den Lüfter zu aktivieren.

Zwischen dem Akku 1 und dem Ladegerät 2 kann eine zusätzliche Elektronik vorgesehen sei, die die oben beschriebenen Funktionen umsetzt, insbesondere die Temperaturmessung, die Logik und/oder die Ansteuerung des Schaltelements 6.

Bei einer Variante ist es möglich, dass der Akku 1 bzw. sein BMS 5 mit dem Ladegerät 2 kommuniziert, entweder drahtbehaftet oder drahtlos. Dabei besteht die Möglichkeit, dass der Akku 1 seine Zelltemperatur (Ist-Temperatur 8) an das Ladegerät 2 sendet. Das Ladegerät 2 kann dann je nach Temperatur mit dem Ladevorgang beginnen oder abwarten, bis der Akku 1 genügend abgekühlt ist.

Alternativ kann der Akku 1 Befehle an das Ladegerät 2 senden, um den Ladevorgang erst zu beginnen, wenn die Zelltemperatur niedriger als der Schwellwert ist.

## Patentansprüche

1. Akku-Ladesystem zum Aufladen eines elektrischen Akkus (1), mit
- einer Ladeeinrichtung (2) zum Bereitstellen eines elektrischen Stroms (3) zum Aufladen des Akkus (1);
- einer Temperaturmesseinrichtung (7) zum Messen der Temperatur an wenigstens einer Stelle an oder in dem Akku (1) und damit Bestimmen eines Temperatur-Istwerts (8); und mit
- einer Steuerungseinrichtung (9) zum Steuern eines Ladevorgangs in Abhängigkeit von der gemessenen Temperatur;
wobei die Steuerungseinrichtung (9) ausgebildet ist, wenigstens die folgenden Betriebsarten zu aktivieren:
| | |
|---|---|
| + | einen Lademodus, in dem der Akku (1) mit elektrischem Strom (3) aufgeladen wird; |
| + | einen Kühlungsmodus, während dem eine Abkühlung des Akkus (1) vorgesehen ist; |
| + | einen Abschaltmodus, in dem der Akku (1) nicht mit elektrischem Strom aufgeladen |
wird und der Akku (1) abgeschaltet wird;
und wobei die Steuerungseinrichtung (9) ausgebildet ist,
- den Temperatur-Istwert (8) mit einem vorgegebenen Temperatur-Schwellwert zu vergleichen;
- den Lademodus zu aktivieren, wenn der Temperatur-Istwert (8) unterhalb des Temperatur-Schwellwerts liegt;
- den Kühlungsmodus zu aktivieren, wenn der Temperatur-Istwert (8) oberhalb des Temperatur-Schwellwerts liegt;
- während eines vorgegebenen Kühlungszeitraums im Kühlungsmodus in Abhängigkeit von dem Temperatur-Istwert (8) den Kühlungsmodus aufrecht zu erhalten oder den Kühlungsmodus zu beenden und in den Lademodus zu wechseln;
- nach Ablauf des Kühlungszeitraums den Abschaltmodus zu aktivieren.

2. Akku-Ladesystem nach Anspruch 1, wobei wenigstens ein Teil der Steuerungseinrichtung (9) in der Ladeeinrichtung (2), in dem Akku (1) oder in einer von der Ladeeinrichtung (2) und dem Akku (1) getrennten Einheit angeordnet ist.

3. Elektrischer Akku (1), mit
- einer Temperaturmesseinrichtung (7) zum Messen der Temperatur an wenigstens einer Stelle an oder in dem Akku (1) und damit Bestimmen eines Temperatur-Istwerts (8); und mit
- einer Steuerungseinrichtung (9) zum Steuern eines Ladevorgangs zum Aufladen des Akkus (19 in Abhängigkeit von der gemessenen Temperatur;
wobei die Steuerungseinrichtung (9) ausgebildet ist, wenigstens die folgenden Betriebsarten zu aktivieren:
| | |
|---|---|
| + | einen Lademodus, in dem der Akku (1) mit elektrischem Strom aufgeladen wird; |
| + | einen Kühlungsmodus, während dem eine Abkühlung des Akkus (1) vorgesehen ist; |
| + | einen Abschaltmodus, in dem der Akku (1) nicht mit elektrischem Strom aufgeladen |
wird und der Akku (1) abgeschaltet wird;
und wobei die Steuerungseinrichtung (9) ausgebildet ist,
- den Temperatur-Istwert (8) mit einem vorgegebenen Temperatur-Schwellwert zu vergleichen;
- den Lademodus zu aktivieren, wenn der Temperatur-Istwert (8) unterhalb des Temperatur-Schwellwerts liegt;
- den Kühlungsmodus zu aktivieren, wenn der Temperatur-Istwert (8) oberhalb des Temperatur-Schwellwerts liegt;
- während eines vorgegebenen Kühlungszeitraums im Kühlungsmodus in Abhängigkeit von dem Temperatur-Istwert (8) den Kühlungsmodus aufrecht zu erhalten oder den Kühlungsmodus zu beenden und in den Lademodus zu wechseln;
- nach Ablauf des Kühlungszeitraums den Abschaltmodus zu aktivieren.

4. Akku-Ladesystem nach Anspruch 1 oder 2 oder elektrischer Akku nach Anspruch 3, wobei die Steuerungseinrichtung (9) ausgebildet ist, während des Lademodus von dem Lademodus in den Kühlungsmodus zu wechseln, wenn der Temperatur-Istwert (8) oberhalb des Temperatur-Schwellwerts liegt.

5. Akku-Ladesystem nach Anspruch 1, 2 oder 4 oder elektrischer Akku nach Anspruch 3 oder 4, wobei die Steuerungseinrichtung (9) ausgebildet ist, während des vorgegebenen Kühlungszeitraums im Kühlungsmodus den Temperatur-Istwert (8) mit dem Temperatur-Schwellwert zu vergleichen und
- den Kühlungsmodus aufrecht zu erhalten, wenn der Temperartur-Istwert (8) oberhalb des Temperatur-Schwellwerts liegt; oder
- den Kühlungsmodus zu beenden und in den Lademodus zu wechseln, wenn der Temperatur-Istwert (8) unterhalb des Temperatur-Schwellwerts liegt.

6. Akku-Ladesystem nach Anspruch 1, 2, 4 oder 5 oder elektrischer Akku nach einem der Ansprüche 3 bis 5, wobei die Steuerungseinrichtung (9) ausgebildet ist, eine Kühlungszeitdauer zu erfassen, während der der Kühlungsmodus aktiv ist, und die Kühlungszeitdauer mit einem vorgegebenen Kühlungszeitraum zu vergleichen.

7. Akku-Ladesystem nach einem der Ansprüche 1, 2 oder 4 bis 6 oder elektrischer Akku nach einem der Ansprüche 3 bis 6, wobei
- in dem Kühlungsmodus die Abkühlung des Akkus (1) vorgesehen ist; und wobei
- die Abkühlung des Akkus (1) gemäß wenigstens einem der folgenden Wirkprinzipien verwirklicht ist:
| | |
|---|---|
| + | Konvektion |
| + | Zwangskonvektion |
| + | Wärmeleitung |
| + | Wärmestrahlung. |

8. Akku-Ladesystem nach einem der Ansprüche 1, 2 oder 4 bis 7 oder elektrischer Akku nach einem der Ansprüche 3 bis 7, wobei eine Lüftungseinrichtung vorgesehen ist, zum Kühlen des Akkus (1) wenigstens während des Kühlungsmodus.

9. Akku-Ladesystem nach einem der Ansprüche 1, 2 oder 4 bis 8 oder elektrischer Akku nach einem der Ansprüche 3 bis 8, wobei
- die Lüftungseinrichtung eine Lüftersteuerung aufweist;
- die Lüftersteuerung die Leistung der Lüftungseinrichtung in Abhängigkeit von dem Temperatur-Istwert (8) variabel ansteuert.

10. Akku-Ladesystem nach einem der Ansprüche 1, 2 oder 4 bis 9 oder elektrischer Akku nach einem der Ansprüche 3 bis 9, wobei die Steuerungseinrichtung (9) ein Schaltelement (6) aufweist, zum Schalten einer Ladestromzufuhr zu dem Akku.

11. Verfahren zum Aufladen eines elektrischen Akkus, mit den Schritten:
- Bereitstellen eines elektrischen Stroms zum Aufladen des Akkus (1);
- Messen der Temperatur an wenigstens einer Stelle an oder in dem Akku (1) und damit Bestimmen eines Temperatur-Istwerts (8);
- Steuern eines Ladevorgangs in Abhängigkeit von der gemessenen Temperatur;
- Aktivieren von wenigstens den folgenden Betriebsarten:
| | |
|---|---|
| + | einen Lademodus, in dem der Akku (1) mit elektrischem Strom aufgeladen wird; |
| + | einen Kühlungsmodus, während dem eine Abkühlung des Akkus (1) vorgesehen ist; |
| + | einen Abschaltmodus, in dem der Akku (1) nicht mit elektrischem Strom aufgeladen |
wird und der Akku (1) abgeschaltet wird;
und wobei das Aktivieren der Betriebsarten gemäß folgenden Regeln erfolgt:
- Vergleichen des Temperatur-Istwerts (8) mit einem vorgegebenen Temperatur-Schwellwert;
- Aktivieren des Lademodus, wenn der Temperatur-Istwert (8) unterhalb des Temperatur-Schwellwerts liegt;
- Aktivieren des Kühlungsmodus, wenn der Temperatur-Istwert (8) oberhalb des Temperatur-Schwellwerts liegt;
- während eines vorgegebenen Kühlungszeitraums im Kühlungsmodus in Abhängigkeit von dem Temperatur-Istwert (8) Aufrechterhalten des Kühlungsmodus oder Beenden des Kühlungsmodus und Wechseln in den Lademodus;
- nach Ablauf des Kühlungszeitraums Aktivieren des Abschaltmodus.
